**Europäisches Patentamt**

**European Patent Office**

**Office européen des brevets**

(19)

(11) Veröffentlichungsnummer: **0 017 133**
**B1**

(12)

# EUROPÄISCHE PATENTSCHRIFT

(45) Veröffentlichungstag der Patentschrift:
**22.12.82**

(21) Anmeldenummer: **80101560.3**

(22) Anmeldetag: **25.03.80**

(51) Int. Cl.³: **C 08 F 238/00,** C 08 F 4/60 //
**(C08F238/00, 238/02)**

(54) **Verfahren zur Herstellung von Copolymerisaten des Acetylens.**

(30) Priorität: **29.03.79 DE 2912572**

(43) Veröffentlichungstag der Anmeldung:
**15.10.80 Patentblatt 80/21**

(45) Bekanntmachung des Hinweises auf die Patenterteilung:
**22.12.82 Patentblatt 82/51**

(84) Benannte Vertragsstaaten:
**DE FR GB**

(56) Entgegenhaltungen:
**FR-A-1 149 218**
**US-A-4 020 265**
**US-A-4 108 942**

**CHEMICAL ABSTRACTS, Band 77, Nr. 8, 21. August 1972, Zusammenfassung Nr. 48944c, Seite 11, Columbus, Ohio, US**
**A.A. BERLIN et al.: «Polymerization and copolymerization of 1,6-heptadiyne on Ziegler-Natta catalysts»**

(73) Patentinhaber: **BASF Aktiengesellschaft,**
**Carl-Bosch-Strasse 38, D-6700 Ludwigshafen (DE)**

(72) Erfinder: **Naarmann, Herbert, Dr., Haardtblick 15,**
**D-6719 Wattenheim (DE)**
Erfinder: **Penzien, Klaus, Dr., Bensheimer Ring 18,**
**D-6710 Frankenthal (DE)**
Erfinder: **Doerfel, Helmut, Dr., Bergstrasse 152,**
**D-6900 Heidelberg 1 (DE)**
Erfinder: **Eckell, Albrecht, Dr., Paul-Klee-Strasse 2,**
**D-6710 Frankenthal (DE)**

Verfahren zur Herstellung von Copolymerisaten des Acetylens

Die Erfindung betrifft die Herstellung von Copolymerisaten des Acetylens, wobei man Gemische aus Acetylen und Di- oder Polyalkinen mit Ziegler-Katalysatoren polymerisiert.

Die Herstellung von Polyacetylenen durch Polymerisation von Acetylen ist bekannt. Sie ist z. B. in den Arbeiten von Hatano in J. Chem. Soc. Japan, Ind. Chem. Sed. (1962) 65, Seite 723 und folgende sowie von D. J. Berets et al. Trans. Farad. Soc. 64, (1968) Seite 823 folgende beschrieben. Auch in neueren Publikationen von H. Shirakawa et al. [J. Chem. Soc. Comm. S. 578 (1977)] ist die Polymerisation von Acetylen zu Polyacetylenen mit Hilfe von Ziegler-Katalysatoren beschrieben. Nach den genannten Methoden werden Produkte erhalten, die in den üblichen Lösungsmitteln vollkommen unlöslich sind und als schwarze amorphe bis teilkristalline Materialien anfallen.

Die Herstellung von Copolymerisaten des Acetylens mit Diacetylenen unter Verwendung von Ziegler-Katalysatoren ist aus der US-PS 4 108 942 bekannt. Die Eigenschaften der mit den dort beschriebenen Katalysatoren erhaltenen Copolymerisaten sind jedoch noch nicht voll befriedigend.

Der Erfindung liegt die Aufgabe zugrunde, ein Verfahren zur Herstellung von Copolymerisaten des Acetylens mit vorteilhaften Eigenschaften zu schaffen.

Die Aufgabestellung der Erfindung wird durch ein Verfahren gelöst, bei dem man Gemische aus Acetylen und Di- oder Polyalkinen mit Ziegler-Katalysatoren polymerisiert.

Gegenstand der Erfindung ist daher ein Verfahren zur Herstellung von Copolymerisaten des Acetylens durch katalytische Polymerisation von Gemischen aus Acetylen und Di- oder Polyalkinen mit Ziegler-Katalysatoren. Das Verfahren ist dadurch gekennzeichnet, dass man als Ziegler-Katalysatoren Gemische aus Titantetraoxialkylen und Aluminiumtrialkylen verwendet.

Als Comonomere für das Acetylen kommen z. B. in Frage: Butadiin, Hexadiin, Octadiin, Diäthinylbenzol, 1,3,5-Triäthinylbenzol, 1,2,4-Triäthinylbenzol, 1,3,5-Tris- trimethylsilyl-äthinyl -2,4,6-trimethylsilylbenzol, 1,3,5-Tris- propinyl(1) -2,4,6-trimethylbenzol. Am zweckmässigsten verwendet man Monomermischungen, die bis zu 50 Mol-% Di- oder Polyalkine, vorzugsweise zwischen 5 und 20 Mol-% Alkine enthalten.

Die Durchführung der Polymerisation wird mit Ziegler-Katalysatoren vorgenommen, die durch Mischungen aus Aluminiumtrialkylen und Titantetraoxialkylen hergestellt werden. Von den Aluminiumtrialkylen eignen sich z. B.: Aluminiumtriäthyl sowie Aluminiumtriisobutyl. Bevorzugt ist das Aluminiumtrioctyl.

Von den Titantetraoxialkylen sind solche zweckmässig, deren Alkylreste 1 bis 10 C-Atome enthalten, insbesondere hat sich das Titantetraoxibutyl als geeignet erwiesen. Das Mischungsverhältnis aus Aluminiumtrialkyl und Titantetraoxialkyl liegt zwischen 0,5 : 1 und 1 : 0,5, vorzugsweise um 1 : 1, jeweils bezogen auf Gewichtsteile.

Den Ziegler-Katalysatoren können auch Metallcarbonyle wie Eisen-, Nickel-, Mangan-, Kobalt- oder Molybdäncarbonyle zugesetzt werden. Das Mischungsverhältnis von Metallcarbonylen, bezogen auf die Aluminiumtrialkylkomponente, beträgt 0,5 : 1 bis 1 : 0,5, vorzugsweise von 1 : 1 jeweils bezogen auf Gewichtsteile.

Die Katalysatormischung wird in Mengen von 0,1 bis 10 Teilen bezogen auf 100 Teile des Gemisches aus Acetylen und anderen Alkinen eingesetzt. Die Polymerisationstemperatur liegt zweckmässig zwischen —90 und +100°C, vorzugsweise zwischen —30 und +30°C. Die Polymerisation erfolgt zweckmässig bei 0,1 bis 500 bar, vorzugsweise um 50 bar.

Die Polymerisation kann z. B. in Hilfsflüssigkeiten vorgenommen werden. Als solche eignen sich gegenüber den Polymerisationskatalysatoren und den Monomeren indifferente Flüssigkeiten, wie aliphatische Öle, Aromaten, Cycloaliphaten aber auch Petroläther, Ligroin oder Cyclopentadien. Die Hilfsflüssigkeiten werden im Verhältnis zu dem Gemisch aus Alkinen in einem Mengenverhältnis von 1 : 1 bis 1000 : 1, vorzugsweise im Bereich von 10 : 1 verwendet. Die Katalysatoren können mit der Hilfsflüssigkeit vorgelegt und/oder während der Polymerisation kontinuierlich zugeführt werden.

Es ist aber auch möglich, die Monomeren in der Gasphase zu polymerisieren. Dabei empfiehlt sich, in das Polymerisationsgefäss einen Trägerstoff einzubringen, der bereits aus feinpulvrigem Polymerisat oder aus anderen Stoffen, z. B. Graphit bestehen kann. Die Katalysatoren werden dann in Hilfsflüssigkeiten aufgeschlämmt eingebracht und die Lösungsmittelanteile nach erfolgter Polymerisation abgezogen.

Nach dem Verfahren werden Copolymerisate des Acetylens mit Di- oder Polyalkinen erhalten, die praktisch unlöslich sind. Die neuen Polymerisate sind als farbige Pigmente oder aufgrund ihrer Filmbildungstendenz als Farbüberzüge auf Metalle, Glas oder Kunststoffe sowohl aufgrund ihres elektrischen und magnetischen Verhaltens von Interesse.

Beispiele

Herstellung des Katalysators:

Zunächst wurden 4,57 g Aluminiumtriäthyl in 50 ml Toluol gemischt (40 mMol). Danach wurden 3,4 g Titantetraoxibutyl zugegeben (10 mMol). Diese Lösung wurde geschüttelt und etwa für die Dauer von 10 Minuten stehen gelassen, wobei die Lösung eine schwarz-braune Farbe annahm. Bei einigen der Versuche wurden Metallcarbonyle zugesetzt. Die jeweils benötigten Katalysatormengen wurden mit einer Spritze entnommen und den Reaktionsansätzen zugesetzt.

**Beispiel 1**

Copolymerisation von Acetylen mit Di- oder Polyalkinen:

In einem 100 ml Rundkolben wurden jeweils 40 ml Acetylen in 50 ml Toluol gelöst, so dass eine gesättigte Lösung erhalten wurde. Danach wurden unterschiedliche Mengen Di- oder Polyalkine zugesetzt und nach dem Mischen jeweils 10 ml der oben angegebenen Katalysatorlösung zugesetzt.

Nach jeweils 24 Stunden bei 0°C wurden jeweils 20 ml methanolische Salzsäure zugegeben. Die schwarzen Niederschläge wurden abfiltriert und mit Methanol gewaschen. Die verbleibende Lösung wurde mehrfach mit Salzsäure geschüttelt. Das Lösungsmittel wurde unter Stickstoff entfernt und der Rückstand nach dem Wägen ermittelt und in verschiedene Lösungsmittel aufgenommen. Die Ergebnisse zeigt Tabelle 1.

TABELLE 1

| Nr. | Zusatz von Metallcarbonylen | Acetylen mg | Di- oder Polyalkin mg | unlösliches Polymer mg |
|---|---|---|---|---|
| 1 | | 400 | 400 Butadiin | 730 |
| 2 | | 400 | 200 » | 590 |
| 3 | | 400 | 100 » | 360 |
| 4 | | 400 | 400 1,3,5-Triäthi-nylbenzol | 740 |
| 5 | | 400 | 300 » | 620 |
| 6 | | 400 | 200 » | 580 |
| 7 | | 400 | 100 » | 790 |
| 8 | Eisencarbonyl 5,0 g | 400 | 100 1,3,5-Triäthi-nylbenzol | 495 |
| 9 | Kobaltcarbonyl 5,0 g | 400 | 100 » | 495 |
| 10 | Nickelcarbonyl 5,0 g | 400 | 300 » | 680 |

**Beispiel 2**

Herstellung von Copolymerisaten:

In ein 500-ml-Gefäss wurde nach dem Evakuieren und Spülen mit Stickstoff jeweils 100 ml Toluol und 20 ml der oben angegebenen Katalysatorlösung zugegeben. Das Reaktionsgefäss wurde auf einer Temperatur von −50°C gehalten. Nach Erreichen dieser Temperatur wurden Gemische aus Acetylen und jeweils unterschiedlicher Mengen Di- oder Polyalkylen in die Flüssigkeit aufgebracht. Nachdem die Polymerisation beendet war, wurde die Flüssigkeit aus dem Reaktionsgefäss abgesaugt. Die erhaltenen Copolymerisate wurde gewaschen und getrocknet.

Die Ergebnisse sind in der beiliegenden Tabelle 2 zusammengefasst.

TABELLE 2

| Nr. | Acetylen (mg) | Di- oder Polyalkin (mg) | unlösliches Polymer (mg) |
|---|---|---|---|
| | | Hexadiin | |
| 1 | 40 | 00 | 40 |
| 2 | 40 | 30 | 68 |
| 3 | 40 | 60 | 98 |
| 4 | 40 | 100 | 135 |

TABELLE 2

| Nr. | Acetylen (mg) | Di- oder Polyalkin (mg) | unlösliches Polymer (mg) |
|---|---|---|---|
| 5 | 40 | 200 | 225 |
| 6 | 40 | 300 | 330 |
| 7 | 40 | 500 | 532 |
| 8 | 40 | 1000 | 1030 |
| 9 | 40 | 3000 | 3030 |
| | | Octadiin | |
| 10 | 40 | 60 | 96 |
| 11 | 40 | 160 | 194 |
| 12 | 40 | 460 | 480 |
| | | 1,3,5-Triäthinyl-benzol | |
| 13 | 40 | 160 | 200 |

**Patentansprüche**

1. Verfahren zur Herstellung von Copolymerisaten des Acetylens durch katalytische Polymerisation von Gemischen aus Acetylen und Di- oder Polyalkinen mit Ziegler-Katalysatoren, dadurch gekennzeichnet, dass man als Ziegler-Katalysatoren Gemische aus Titantetraoxialkylen und Aluminiumtrialkylen verwendet.

2. Verfahren zur Herstellung von Copolymerisaten des Acetylens nach Anspruch 1, dadurch gekennzeichnet, dass man den Ziegler-Katalysatoren Metallcarbonyl zusetzt.

3. Verfahren zur Herstellung von Copolymerisaten des Acetylens nach Anspruch 1, dadurch gekennzeichnet, dass man das Gemisch aus Acetylen und Di- oder Polyalkinen in einer Hilfsflüssigkeit polymerisiert.

4. Verfahren zur Herstellung von Copolymerisaten des Acetylens nach Anspruch 1, dadurch gekennzeichnet, dass man die Polymerisation in Gegenwart von Trägerstoffen vornimmt.

5. Verfahren zur Herstellung von Copolymerisaten des Acetylens nach Ansprüchen 1, 2 und 3, dadurch gekennzeichnet, dass man bei einer Temperatur zwischen −70 bis +100°C polymerisiert.

**Claims**

1. A process for the preparation of acetylene copolymers by catalytic polymerization of mixtures of acetylene and dialkynes or polyalkynes with Ziegler catalysts, wherein mixtures of titanium tetraoxyalkyls and aluminium-trialkyls are used as Ziegler catalysts.

2. A process for the preparation of acetylene copolymers as claimed in claim 1, wherein metal carbonyls are added to the Ziegler catalysts.

3. A process for the preparation of acetylene copolymers as claimed in claim 1, wherein the mixture of acetylene and dialkynes or polyalkynes is polymerized in an auxiliary fluid.

4. A process for the preparation of acetylene copolymers as claimed in claim 1, wherein the polymerization is carried out in the presence of carriers.

5. A process for the preparation of acetylene copolymers as claimed in claims 1, 2 and 3, wherein the polymerization is carried out at from −70 to +100°C.

**Revendications**

1. Procédé pour la préparation de copolymères de l'acétylène par polymérisation catalytique de mélanges d'acétylène et de di- ou de polyalcynes avec des catalyseurs de Ziegler, caractérisé en ce qu'on utilise, en tant que catalyseurs de Ziegler, des mélanges de titane-tétraoxyalcoyles et d'aluminium-trialcoyles.

2. Procédé pour la préparation de copolymères de l'acétylène selon la revendication 1, caractérisé en ce qu'on ajoute des métaux-carbonyles aux catalyseurs de Ziegler.

3. Procédé pour la préparation de copolymères de l'acétylène selon la revendication 1, caractérisé en ce qu'on polymérise le mélange d'acétylène et de di- ou de polyalcynes dans un liquide auxiliaire.

4. Procédé pour la préparation de copolymères de l'acétylène selon la revendication 1, caractérisé en ce qu'on procède à la polymérisation en présence de matières de support.

5. Procédé pour la préparation de copolymères de l'acétylène selon l'une quelconque des revendications 1 à 3, caractérisé en ce qu'on polymérise à une température comprise entre −70 et +100°C.